(19) Europäisches Patentamt
European Patent Office
Office européen des brevets

(11) **EP 2 995 973 B1**

(12) **EUROPEAN PATENT SPECIFICATION**

(45) Date of publication and mention
of the grant of the patent:
**14.06.2017 Bulletin 2017/24**

(51) Int Cl.:
*G01S 19/07* (2010.01)     *G01S 19/43* (2010.01)
*G01S 19/51* (2010.01)

(21) Application number: **15185013.8**

(22) Date of filing: **14.09.2015**

(54) **METHOD AND SYSTEM FOR DYNAMIC-TO-DYNAMIC PRECISE RELATIVE POSITIONING USING GLOBAL NAVIGATION SATELLITE SYSTEMS**

VERFAHREN UND SYSTEM ZUR GENAUEN RELATIVEN DYNAMIC-TO-DYNAMIC-POSITIONIERUNG UNTER VERWENDUNG GLOBALER SATELLITENNAVIGATIONSSYSTEME

PROCÉDÉ ET SYSTÈME DE POSITIONNEMENT RELATIF PRÉCIS DYNAMIQUE-À-DYNAMIQUE UTILISANT DES SYSTÈMES GLOBAUX DE NAVIGATION PAR SATELLITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2014 NL 2013471**

(43) Date of publication of application:
**16.03.2016 Bulletin 2016/11**

(73) Proprietor: **Fugro N.V.**
**2264 SG Leidschendam (NL)**

(72) Inventor: **Liu, Xianglin**
**2263 HW Leidschendam (NL)**

(74) Representative: **Nederlandsch Octrooibureau**
**P.O. Box 29720**
**2502 LS The Hague (NL)**

(56) References cited:
**WO-A1-2006/048448     WO-A1-2014/065664**
**US-A1- 2014 184 442     US-B1- 6 181 274**

**Description**

TECHNICAL FIELD

The present invention relates to a method for providing correction data in a Global Navigation Satellite System (GNSS) based Precise Relative Positioning (PRP) system, the method comprising determining the correction data using one or more (dynamic) reference stations, transmitting the correction data to a mobile station with a primary update frequency, and applying the correction data in mobiles for precise relative positioning.

BACKGROUND ART

Traditional precise relative positioning using global navigation satellite systems is known as such, see textbooks such as 'GPS for Geodesy' by P.J.G. Teunissen and A. Kleusberg (eds), 2nd ed., Springer, 1998.

Furthermore, WO 2006/048448 A1 discloses a method for transmitting correction data for a satellite-based positioning signal wherein a first correction difference is updated with a first rate, and an item of correction information is updated with a second rate, these first and second rates differing from one another.

SUMMARY OF INVENTION

The present invention seeks to provide an improved method and system for providing precise relative positioning using satellite navigation systems in a fully dynamic situation.

According to the present invention, a method as defined in claim 1 is provided, wherein the correction data used for precise relative positioning comprises three different groups: stable correction, i.e. hardware delay bias (B), non-dispersive correction, i.e. troposphere (T), and dispersive correction, i.e. ionosphere (I). The one or more subgroups of correction data are transmitted with a mutually different secondary update frequency. This implementation saves on bandwidth requirements from the one or more reference stations to the mobile station, or in other words, the capacity requirements on the mobile station can be lower (e.g. use a low data rate channel, ability to better handle poor reception conditions, allow a longer distance to the mobile station, etc.).

It is noted that both reference and mobile stations may be in a dynamic situation, not limited to the traditional case that the reference stations are static with known coordinates. The implementation is particularly useful for some offshore/ocean engineering operations, such as seismic surveying, platform installation and pipelining engineering. The implementation can provide precise relative positioning for take-off and landing of aircraft on carrier, and for vehicle to vehicle tracking.

In a further aspect, the present invention relates to a Global Navigation Satellite (GNS) signal correction system for estimating and transmitting GNS signal corrections to a mobile receiver, according to claim 14. The GNS signal correction system comprises one or more dynamic reference stations having a system GNSS receiver for acquiring GNSS data comprising pseudo range system observations ($P_a$) and carrier phase system observations ($\Phi_a$) from a plurality of GNSS satellites transmitted over multiple epochs, a system processor unit configured for receiving the GNSS data from the one or more reference stations in real time, and calculating correction data. A system signal transmitter is provided connected to the system processor unit for transmitting the correction data to the mobile station. The system processor unit is configured to execute the present invention method embodiments, and allows the GNSS signal correction system to service multiple mobile stations in a local range area.

In an even further aspect, the present invention relates to a mobile receiver for use with GNS signal correction system, according to claim 15. The mobile station comprises a mobile GNSS receiver for acquiring GNSS data comprising pseudo range mobile observations ($P_r$) and carrier phase mobile observations ($\Phi_r$) from the plurality of GNSS satellites transmitted over multiple epochs, and a mobile signal receiver for receiving GNSS corrections. The mobile station further comprises a mobile processing unit connected to the mobile GNSS receiver and the mobile signal receiver. The mobile processing unit is arranged to use correction data being transmitted according to any one of the present invention method embodiments. Subgroups of correction data are thus used by the mobile station, which are received at different interval times. If an indication is received from the GNS signal correction system that a precise position was not available for an epoch, the sum of correction data may be used in order to obtain an accurate relative position.

BRIEF DESCRIPTION OF DRAWINGS

Embodiments will now be described, by way of example only, with reference to the accompanying schematic drawings in which corresponding reference symbols indicate corresponding parts.

   Figure 1 shows a schematic diagram of an exemplary GNSS signal correction system;

Figure 2a shows a timing diagram of a prior art correction transmission method;
Figure 2b shows a timing diagram of an exemplary embodiment of the present invention.

DESCRIPTION OF EMBODIMENTS

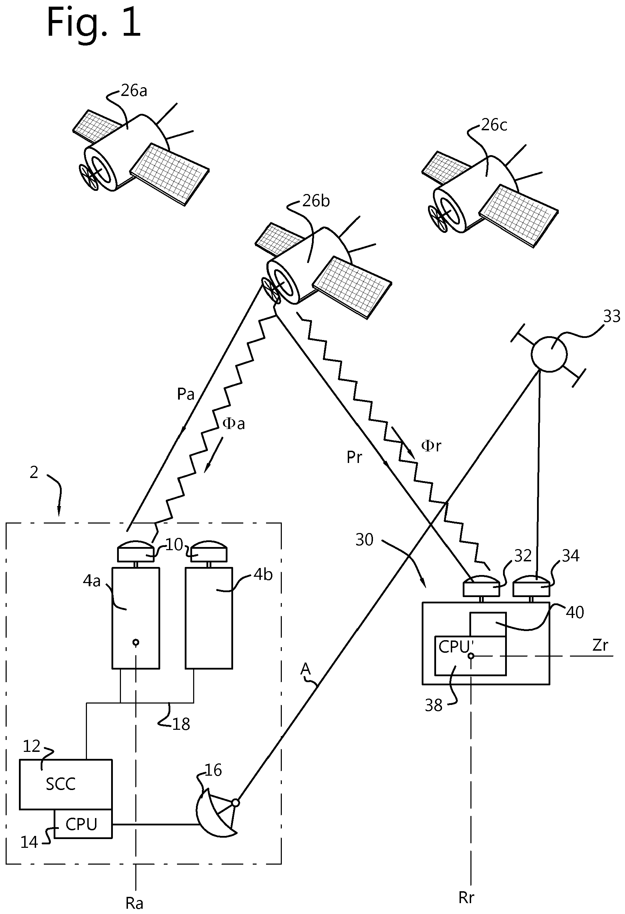

As illustrated in the schematic diagram of Fig. 1, the present invention embodiments may be implemented in a Global Navigation Satellite (GNS) signal correction system 2, in combination with a mobile station 30. The GNS signal correction system 2 comprises one or more (dynamic) reference stations, e.g. 4a, 4b with associated Global Navigation Satellite System (GNSS) antenna 10 to continuously compute site-dependent (zenith) tropospheric correction and atmospheric and hardware delay corrections of satellites from GNSS signals received from a plurality of GNSS satellites 26a-c.

Traditionally, relative positioning means position estimation of a mobile station 30 with respect to one or more reference stations 4a, 4b. The present invention embodiments do not require the positions of the reference station 4a, 4b to be known. As a matter of fact, the precise kinematic coordinates can be simultaneously calculated together with the three types of corrections mentioned above in the present invention embodiments.

Normally, in a GNSS based PRP system, the correction is computed in the observation domain and is treated as a single value and transmitted to mobile stations 30. The present invention embodiments determine corrections using a Precise Point Positioning (PPP) based GNS signal correction system 2, the obtained correction data, comprising a hardware delay bias (B), tropospheric corrections (T) and ionospheric corrections (I), are transmitted periodically as a single packet of correction data $A$ at predefined intervals with an interval $T_r$, i.e. with a primary update frequency $f_r$ ($f_r=1/T_r$), or is treated separately both in the GNS signal correction system 2 and in the mobile stations 30.

In general, a method and system for dynamic-to-dynamic precise relative positioning using global navigation satellite systems requires:

• GNSS signals from the plurality of GNSS satellite 26a-c;
• The GNS signal correction system 2, comprising:

  - one dynamic reference station or several reference stations for acquiring GNSS data comprising pseudo range system observations $P_a$ and carrier phase system observations $\Phi_a$ from a plurality of GNSS satellites 26a-c transmitted over multiple epochs;
  - a system processor unit 14 configured for collecting reference station data in real-time, for processing reference station data to generate GNSS corrections that comprises B, T and I, for encoding corrections, and for distributing encoded corrections to mobile users;
  - real-time data links 18 between the reference stations 4a, 4b and the System Control Centre (SCC) 12, and

• The mobile or rover 30 configured with software for real-time processing of GNSS receiver data and PPP based GNSS corrections and for computing the precise relative positions.

Generation of corrections from a single (dynamic) reference station

The measurement model for a code observation $p$ and a phase observation $\phi$ at dynamic reference station $a$ to satellite $s$ ($s$ = 1... $n$), at frequency $i$ ($i$ = 1, 2), and time $t$, both expressed in meters, reads

$$p_{i,a}^s = R_a^s + m_a^s \cdot T_a + c\delta t_a - c\delta t^s + \gamma_i I_a^s + d_{p_i,a} - d_{p_i}^s$$

$$\phi_{i,a}^s = R_a^s + m_a^s \cdot T_a + c\delta t_a - c\delta t^s - \gamma_i I_a^s + d_{\phi_i,a} - d_{\phi_i}^s + \lambda_i N_{i,a}^s \tag{1}$$

where $R_a^s$ is the geometric range between reference station and satellite, $T_a$ the zenith tropospheric delay with mapping function $m_a^s$, c the speed of light, $\delta t_a$ and $\delta t^s$ the receiver and satellite clock bias, respectively, $\gamma_i = f_1^2 / f_i^2$, $f_i$ the carrier frequency, $I_a^s$ the ionospheric effect; $d_{pi,a}$ and $d_{\phi i,a}$ are the receiver hardware delays (or biases) on code and phase, respectively, $d_{p_i}^s$ and $d_{\phi_i}^s$ are the satellite hardware delays (or biases) on code and phase, respectively, where it is assumed that these satellite hardware delays are relatively stable in time, $N_{i,a}^s$ the integer carrier ambiguity, and $\lambda_i = c/f_i$ the carrier wavelength. The measurement noise is not written in the observation equations for brevity.

The present method embodiments assume that precise predicted satellite orbits and clocks are provided. It should be mentioned that the satellite clocks are computed on the basis of ionosphere-free combinations and comprise code hardware delays (so-called code clocks). The real clock is written as follows:

$$\widetilde{b}^s := c\delta t^s + d^s_{p_3} + D \qquad (2)$$

Where, $d^s_{p_3} = \dfrac{\gamma_2}{\gamma_2 - \gamma_1} d^s_{p_1} - \dfrac{\gamma_1}{\gamma_2 - \gamma_1} d^s_{p_2}$, $D$ is the datum, e.g. $D := -\left(c\delta t^{ref} + d^{ref}_{p_3}\right)$ when a reference satellite is selected as the datum, or

$$D := -\frac{1}{n}\left(c\delta t^1 + c\delta t^2 + \cdots + c\delta t^n + d^1_{p_3} + d^2_{p_3} + \cdots + d^n_{p_3}\right)$$

when the average of all satellite clocks is chosen as the datum.

The present method embodiments propose the following reparameterization for pseudo range and carrier phase observation equations after linearization of Eq. (1):

$$\delta\widetilde{p}^s_{i,a} = \mu^s_a \Delta x_a + m^s_a T_a + t_a + \gamma_i \widetilde{I}^s_a \qquad (3)$$

$$\delta\widetilde{\phi}^s_{i,a} = \mu^s_a \Delta x_a + m^s_a T_a + t_a - \gamma_i \widetilde{I}^s_a + \lambda_i a^s_{i,a} \qquad (4)$$

where $\mu^s_a$ is the unit vector of line-of-sight between the mobile receiver $a$ and satellite $s$ ; $\delta\widetilde{p}^s_{i,a} = p^s_{i,a} - R^s_a + \widetilde{b}^s$, and $\delta\widetilde{\phi}^s_{i,a} = \phi^s_{i,a} - R^s_a + \widetilde{b}^s$, here $R^s_a$ is computed using precise orbit and a priori coordinates of dynamic reference station $a$, $\widetilde{b}^s$ is the precise clock; $\Delta x_a$ the correction to the a priori position. Furthermore

$$t_a := c\delta t_a - \frac{\gamma_2}{\gamma_1 - \gamma_2} d_{p_1,a} + \frac{\gamma_1}{\gamma_1 - \gamma_2} d_{p_2,a} + D \qquad (5)$$

$$\widetilde{I}^s_a := I^s_a + \frac{\gamma_1}{\gamma_1 - \gamma_2}(d_{p_1,a} - d_{p_2,a} - d^s_{p_1} + d^s_{p_2}) \qquad (6)$$

$$a^s_{1,a} := N^s_{1,a} + \frac{1}{\lambda_1}\left(d_{\phi_1,a} - d^s_{\phi_1} + \frac{\gamma_1 + \gamma_2}{\gamma_1 - \gamma_2}\left(d_{p_1,a} - d^s_{p_1}\right) - \frac{2\gamma_1}{\gamma_1 - \gamma_2}\left(d_{p_2,a} - d^s_{p_2}\right)\right) \qquad (7)$$

$$a^s_{2,a} := N^s_{2,a} + \frac{1}{\lambda_2}\left(d_{\phi_2,a} - d^s_{\phi_2} + \frac{2\gamma_2}{\gamma_1 - \gamma_2}\left(d_{p_1,a} - d^s_{p_1}\right) - \frac{\gamma_1 + \gamma_2}{\gamma_1 - \gamma_2}\left(d_{p_2,a} - d^s_{p_2}\right)\right) \qquad (8)$$

The functional model for $n$ satellites can be written as follows:

$$
\begin{bmatrix} P_{1,a} \\ P_{2,a} \\ \Phi_{1,a} \\ \Phi_{2,a} \end{bmatrix} = \begin{bmatrix} \mu_a & M_a & e_n & \gamma_1 I_n & & \\ \mu_a & M_a & e_n & \gamma_2 I_n & & \\ \mu_a & M_a & e_n & -\gamma_1 I_n & \lambda_1 I_n & \\ \mu_a & M_a & e_n & -\gamma_2 I_n & & \lambda_2 I_n \end{bmatrix} \begin{bmatrix} \Delta x_a \\ T_a \\ t_a \\ I_a \\ A_{1,a,zd} \\ A_{2,a,zd} \end{bmatrix} \tag{9}
$$

where

$$
\mu_a := \begin{pmatrix} \mu_a^1 & \mu_a^2 & \cdots & \mu_a^n \end{pmatrix}^T
$$

$$
P_{i,a} := \begin{pmatrix} \delta \widetilde{p}_{i,a}^1 & \delta \widetilde{p}_{i,a}^2 & \cdots & \delta \widetilde{p}_{i,a}^n \end{pmatrix}^T
$$

$$
\Phi_{i,a} := \begin{pmatrix} \delta \widetilde{\phi}_{i,a}^1 & \delta \widetilde{\phi}_{i,a}^2 & \cdots & \delta \widetilde{\phi}_{i,a}^n \end{pmatrix}^T
$$

$$
M_a := \begin{pmatrix} m_a^1 & m_a^2 & \cdots & m_a^n \end{pmatrix}^T
$$

$$
e_n := \begin{pmatrix} 1 & 1 & \cdots & 1 \end{pmatrix}^T
$$

$$
I_a := \begin{pmatrix} \widetilde{I}_a^1 & \widetilde{I}_a^2 & \cdots & \widetilde{I}_a^n \end{pmatrix}^T
$$

$$
A_{i,a,zd} := \begin{pmatrix} a_{i,a}^1 & a_{i,a}^2 & \cdots & a_{i,a}^n \end{pmatrix}^T
$$

$I_n$ is the $n \times n$ identity matrix. There is an option to select a reference satellite at the reference side, however it is not a must for a single site reference station.

According to the present invention embodiments, the corrections are calculated using the above described functional models. The corrections, particularly the hardware delay bias (B) are then transmitted to a mobile station 30, which then applies the corrections to fix integer ambiguities, and/or to reduce the convergence time. As an option for those mobiles being nearby the reference stations, the corrections to be transmitted may also comprise the tropospheric delay term $T_a$, and/or the ionospheric delay term $I_a$. This embodiment allows a faster convergence at the mobile station 30, as these parameters allow to constrain the ionospheric and tropospheric effects at the mobile station 30. In other words, the time needed to reliably resolve the ambiguities at the mobile station 30 is significantly shorter when using the ionospheric and tropospheric corrections.

Estimation of corrections from a small network of reference stations

The present invention embodiments propose an approach to derive a single set of corrections from a small network of reference stations. The concept of "small" here assumes that the ionosphere and troposphere be the same for all reference stations in the network (basically the size of the network is smaller than $(15 - 20)*(15 - 20)$ cm$^2$). The approach makes use of the advantage to form double differenced ambiguities between reference sites.

In this case, the corrections (ionosphere and hardware delay bias) are formed with respect to a reference satellite. Therefore the receiver-related hardware delays are eliminated. The observation equations for station *a* and satellite *s* with satellite *n* being the reference satellite can be written as:

$$\delta \widetilde{p}_{i,a}^{\,s} = \mu_a^s \Delta x_a + m_a^s T + t_{p_i,a} + \gamma_i \widetilde{I}^{\,s,n} \tag{10}$$

$$\delta \widetilde{\phi}_{i,a}^{\,s} = \mu_a^s \Delta x_a + m_a^s T + t_{\phi_i,a} - \gamma_i \widetilde{I}^{\,s,n} + \lambda_i a_{i,a}^{s,n} \tag{11}$$

where

$$\widetilde{I}^{\,s,n} := \widetilde{I}^{\,s} - \widetilde{I}^{\,n} = I^s - I^n + \frac{\gamma_1}{\gamma_1 - \gamma_2}(-d_{p_1}^s + d_{p_2}^s + d_{p_1}^n - d_{p_2}^n) \tag{12}$$

$$a_{1,a}^{s,n} := a_{1,a}^s - a_{1,a}^n = N_{1,a}^{s,n} - \frac{1}{\lambda_1}\left( d_{\phi_1}^{s,n} + \frac{\gamma_1 + \gamma_2}{\gamma_1 - \gamma_2} d_{p_1}^{s,n} - \frac{2\gamma_1}{\gamma_1 - \gamma_2} d_{p_2}^{s,n} \right) \tag{13}$$

$$a_{2,a}^{s,n} := a_{2,a}^s - a_{2,a}^n = N_{2,a}^{s,n} - \frac{1}{\lambda_2}\left( d_{\phi_2}^{s,n} + \frac{2\gamma_2}{\gamma_1 - \gamma_2} d_{p_1}^{s,n} - \frac{\gamma_1 + \gamma_2}{\gamma_1 - \gamma_2} d_{p_2}^{s,n} \right) \tag{14}$$

$$\begin{aligned} t_{p_1,a} &:= t_a + \gamma_1 \widetilde{I}_a^{\,n} \\ t_{p_2,a} &:= t_a + \gamma_2 \widetilde{I}_a^{\,n} \\ t_{\phi_1,a} &:= t_a - \gamma_1 \widetilde{I}_a^{\,n} + a_{1,a}^n \\ t_{\phi_2,a} &:= t_a - \gamma_2 \widetilde{I}_a^{\,n} + a_{2,a}^n \end{aligned} \tag{15}$$

The observation equations for station $b$ and satellite $s$ with satellite $n$ being the reference satellite can be written as:

$$\delta \widetilde{p}_{i,b}^{\,s} = \mu_b^s \Delta x_b + m_b^s T + t_{p_i,b} + \gamma_i \widetilde{I}^{\,s,n} \tag{16}$$

$$\delta \widetilde{\phi}_{i,b}^{\,s} = \mu_b^s \Delta x_b + m_b^s T + t_{\phi_i,b} - \gamma_i \widetilde{I}^{\,s,n} + \lambda_i a_{i,b}^{s,n} \tag{17}$$

The troposphere and ionosphere are the same for the two stations, and therefore are written as $T$ and $\widetilde{I}^{s,n}$, respectively. In addition, $m_a^s = m_b^s$, and it will be denoted as $m^s$ in the sequel. The phase observation of station $b$ can be reparameterized:

$$\begin{aligned} \delta \widetilde{\phi}_{i,b}^{\,s} &= \mu_b^s \Delta x_b + m_b^s T + t_{\phi_i,b} - \gamma_i \widetilde{I}^{\,s,n} + \lambda_i a_{i,a}^{s,n} + \lambda_i a_{i,b}^{s,n} - \lambda_i a_{i,a}^{s,n} \\ &= \mu_b^s \Delta x_b + m_b^s T + t_{\phi_i,b} - \gamma_i \widetilde{I}^{\,s,n} + \lambda_i a_{i,a}^{s,n} + \lambda_i a_{i,a,b}^{s,n} \\ &= \mu_b^s \Delta x_b + m_b^s T + t_{\phi_i,b} - \gamma_i \widetilde{I}^{\,s,n} + \lambda_i a_{i,a}^{s,n} + \lambda_i N_{i,a,b}^{s,n} \end{aligned} \tag{18}$$

where

$$N_{i,a,b}^{s,n} = N_{i,b}^s - N_{i,b}^n - N_{i,a}^s + N_{i,a}^n$$

is a double difference ambiguity, which should be integer.

Assuming station *a* as the master reference station, the observation model for one epoch is given by

$$y = Ax \qquad (19)$$

with

$$y := \begin{pmatrix} P_{1,a}^{T} & P_{2,a}^{T} & \Phi_{1,a}^{T} & \Phi_{2,a}^{T} & P_{1,b}^{T} & P_{1,b}^{T} & \Phi_{1,b}^{T} & \Phi_{2,b}^{T} \end{pmatrix}^{T} \qquad (20)$$

$$x := \begin{pmatrix} \Delta x_a & \Delta x_b & T & t_{p_1,a} & t_{p_2,a} & t_{\phi_1,a} & t_{\phi_2,a} & t_{p_1,b} & t_{p_2,b} & t_{\phi_1,b} & t_{\phi_2,a} & I_{sd}^{T} & \cdots \\ & & & & & \cdots & d_{1,a,sd}^{T} & d_{2,a,sd}^{T} & N_{1,a,b}^{T} & N_{2,a,b}^{T} \end{pmatrix}^{T} \qquad (21)$$

$$A := \begin{pmatrix}
\mu_a & M & e_n & & & & & & \gamma_1 E_{n\times(n-1)} & \cdots \\
\mu_a & M & & e_n & & & & & \gamma_2 E_{n\times(n-1)} & \cdots \\
\mu_a & M & & & e_n & & & & -\gamma_1 E_{n\times(n-1)} & \cdots \\
\mu_a & M & & & & e_n & & & -\gamma_2 E_{n\times(n-1)} & \cdots \\
& \mu_b & M & & & & e_n & & \gamma_1 E_{n\times(n-1)} & \cdots \\
& \mu_b & M & & & & & e_n & \gamma_2 E_{n\times(n-1)} & \cdots \\
& \mu_b & M & & & & & & e_n & -\gamma_1 E_{n\times(n-1)} & \cdots \\
& \mu_b & M & & & & & & & e_n & -\gamma_2 E_{n\times(n-1)} & \cdots
\end{pmatrix}$$

$$\begin{pmatrix}
\cdots & & & \\
\cdots & & & \\
\cdots & \lambda_1 E_{n\times(n-1)} & & \\
\cdots & & \lambda_2 E_{n\times(n-1)} & \\
\cdots & & & \\
\cdots & & & \\
\cdots & \lambda_1 E_{n\times(n-1)} & & \lambda_1 E_{n\times(n-1)} \\
\cdots & & \lambda_2 E_{n\times(n-1)} & & \lambda_1 E_{n\times(n-1)}
\end{pmatrix} \qquad (22)$$

where,

$$\mu_b := \begin{pmatrix} \mu_b^1 & \mu_b^2 & \cdots & \mu_b^n \end{pmatrix}^{T}$$

$$P_{i,b} := \begin{pmatrix} \delta \widetilde{p}_{i,b}^1 & \delta \widetilde{p}_{i,b}^2 & \cdots & \delta \widetilde{p}_{i,b}^n \end{pmatrix}^{T}$$

$$\Phi_{i,b} := \begin{pmatrix} \delta\widetilde{\phi}_{i,b}^{1} & \delta\widetilde{\phi}_{i,b}^{2} & \cdots & \delta\widetilde{\phi}_{i,b}^{n} \end{pmatrix}^{T}$$

$$M := \begin{pmatrix} m^{1} & m^{2} & \cdots & m^{n} \end{pmatrix}^{T}$$

$$e_{n} := \begin{pmatrix} 1 & 1 & \cdots & 1 \end{pmatrix}^{T}$$

$$I_{sd} := \begin{pmatrix} \widetilde{I}^{1,n} & \widetilde{I}^{2,n} & \cdots & \widetilde{I}^{n-1,n} \end{pmatrix}^{T}$$

$$d_{i,a,sd} := \begin{pmatrix} a_{i,a}^{1,n} & a_{i,a}^{2,n} & \cdots & a_{i,a}^{n-1,n} \end{pmatrix}^{T}$$

$$N_{i,a,b} := \begin{pmatrix} N_{i,a,b}^{1,n} & N_{i,a,b}^{2,n} & \cdots & N_{i,a,b}^{n-1,n} \end{pmatrix}^{T}$$

$$E_{n\times(n-1)} := \begin{pmatrix} I_{n-1} \\ 0_{n-1}^{T} \end{pmatrix} = \begin{pmatrix} 1 & & & \\ & \ddots & & \\ & & & 1 \\ 0 & \cdots & & 0 \end{pmatrix}$$

Adding more stations, e.g. c , will extend the state vector with parameters $\Delta x_c$ , $t_{pi,c}$, $t_{\phi i,c}$ and $N_{i,c,a}$. Correction terms $d_{i,a,sd}$, $I_{sd}$ and T remain there and can be estimated more precisely than for the case of two stations.

According to the present invention embodiments, the corrections are calculated using the above described functional models. The corrections, particularly the hardware delay bias B (i.e. $d_{i,a,sd}$) are then transmitted to a mobile station 30, which applies the corrections to fix integer ambiguities, and/or to improve the convergence time. For those mobiles being nearby the reference stations, the corrections to be transmitted also comprise the ionospheric delay term I (i.e. $I_{sd}$) and/or the tropospheric delay term T (i.e. $T$). Thus, in an embodiment of the present invention, the correction data B, I, T are provided using a GNSS reference station 4a, 4b, for which the position and other parameters are estimated using a Precise Point Positioning (PPP) technique.

In view of the above, the invention can also be embodied in a GNS signal correction system 2 for estimating and transmitting GNS signal corrections $A$ to a mobile station 30. The GNS signal correction system 2 comprises one or more reference stations 4a, 4b comprising a system GNSS receiver 10 for acquiring GNSS data comprising pseudo range system observations $P_a$ and carrier phase system observations $\Phi_a$ from a plurality of GNSS satellites 26a-c transmitted over multiple epochs, a system processor unit 14 configured for receiving the GNSS data from the one or more reference stations 4a, 4b in real time, and calculating correction data $A$, and a system signal transmitter 16 connected to the system processor unit 14 for transmitting the correction data $A$ to the mobile station 30. The system processor unit 14 is configured to execute the method embodiments as described herein.

Transmission

According to the present invention embodiments, the correction data (B, I, T) are transmitted to a mobile station 30 with an update frequency. The broadcast correction data comprises one or more subgroups of correction data B, I, T, and the one or more subgroups of correction data (B, I, T) are transmitted with a mutually different secondary update frequency ($f_1$ ... $f_n$). As already described above, the one or more subgroups of correction data may comprise tropospheric corrections T, ionospheric corrections I, and ambiguity (or hardware delay bias) B. It is also noted that the reference stations 4a, 4b as discussed above may comprise dynamic reference stations, i.e. the exact location of the reference stations 4a, 4b may change during operation.

According to the present invention embodiments, the individual corrections (i.e. the subgroups of correction data B, I, T) are not necessarily transmitted in the same interval, as they have different stabilizations. Thus, the corrections $A$ may comprise three different types: stable correction, i.e. hardware delay bias (B), non-dispersive correction, i.e.

troposphere (T), and dispersive correction, i.e. ionosphere (I). The method of the present invention embodiments has the further advantage that the corrections of hardware delay (B) with or without the other two types of corrections I, T may be used to form pseudo-observations in mobiles for precise relative positioning. Furthermore, different constraints can be imposed in mobile stations 30 when the dispersive and non-dispersive corrections are used in a separate, non-synchronous manner. In this case, a faster or even instantaneous ambiguity-fixing can be achieved, consequently resulting in millimeter precision of baselines.

In one embodiment the secondary update frequency $1/T_3$ of the hardware delay bias B is lower than the secondary update frequency $1/T_1$, $1/T_2$ of the tropospheric and ionospheric corrections (T, I), e.g. at least three times lower. The secondary update frequency $1/T_3$ of the hardware delay bias B is e.g. less than once per twenty seconds, e.g. once per sixty seconds. In this case, the ambiguity parameters in the mobile have an integer nature and an ambiguity estimation scheme may be triggered. The secondary update frequency $1/T_1$ of the tropospheric correction (T) may be at least once per thirty seconds. In this case, the tropospheric parameter in the mobile is constrained to e.g. centimeter level. The secondary update frequency $1/T_2$ of the ionospheric correction parameter I is at least once per twenty seconds, e.g. once per five seconds. In this case, the ionospheric parameters in mobile are constrained to e.g. centimeter level. In a further embodiment, the secondary update frequency $1/T_2$ of the ionospheric corrections (I) and the secondary update frequency $1/T_1$ of the tropospheric corrections (T) are different.

The corrections B may be the most stable ones that can be transmitted in a very sparse interval (e.g. every minute). The correction T is the second stable one that can be transmitted in a relatively sparse interval (e.g. every 30 seconds). The corrections I are dispersive ones that have to be transmitted in relatively intensive interval (e.g. every 5 seconds). All these corrections do not have to be transmitted every second as required in the traditional way of precise relative positioning. This will certainly save bandwidth requirements for the transmission channel between the GNS signal correction system 2 and the mobile station 30, or in other words, requirements on the mobile receiver 30 can be lower (e.g. low data rate channel, poor signal reception capability, long distance, etc.).

It is noted that one or more of the secondary update frequencies $f_1 \ldots f_n$ may be equal to the primary frequency $f_r$ (in case two or more subgroups of correction data B, I, T, are present). Thus, in a further embodiment, an initial update interval $t_1$ or $t_2$ or $t_3$ of the one or more subgroups B, I, T is the same or different in a further embodiment, allowing flexible use of the transmission channel.

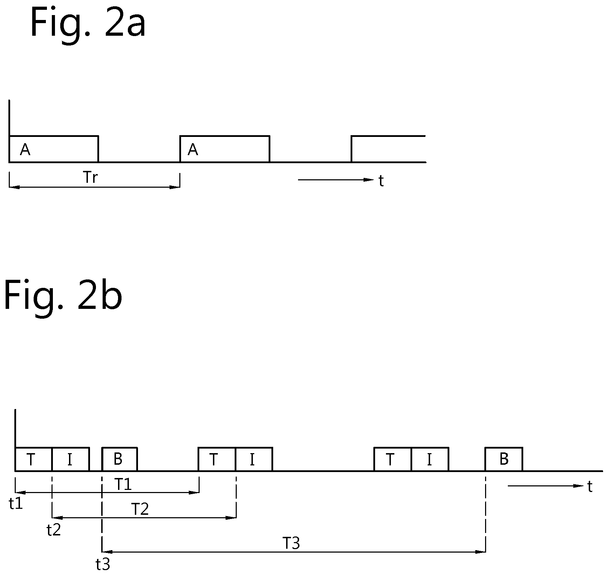

In prior art GNSS based PRP systems, the residual is treated as a single value and transmitted as correction data A to mobile stations 30. Even when determining the correction using a Precise Point Positioning (PPP) based GNSS signal correction system 2, the obtained correction data (hardware delay bias B, tropospheric corrections T and ionospheric corrections I) is transmitted periodically as a single packet of correction data A, as shown schematically in Fig. 2a, at predefined intervals with an interval $T_r$, i.e. with a primary update frequency $f_r$ ($f_r$=1/$T_r$).

An exemplary embodiment of transmission of correction data is shown graphically in Fig. 2b. At a time $t_1$, the tropospheric corrections T are transmitted, directly followed at time $t_2$ by the ionospheric corrections I. Somewhat later, the hardware delay parameters B follow at time $t_3$. The subgroup of tropospheric and ionospheric parameters T, I is transmitted with a period $T_1$ (equal to time period $T_2$ in this case), and the hardware delay bias B with a period $T_3$. Of course, the update frequency of the parameters is the reciprocal of the period ($f_i$=1/$T_i$).

Mobile

According to the present invention embodiments, the mobile station or rover 30 is configured with software for real-time processing of GNSS receiver data and the received corrections B, and/or I and/or T. A mobile station 30 comprises a GNSS (e.g. GPS) receiver 32, an (optional) user interface unit 40, as well as a dedicated processing unit 38 for applying and implementing the method embodiments as described below. The processing unit 40 is arranged to receive the pseudo range mobile observations $P_r$ and carrier phase mobile observations $\Phi_r$ from the GNSS receiver 32. The dedicated processing unit 38 co-operates with a separate receiving antenna 34 for receiving correction data A as transmitted by the GNS signal correction system 2. As shown in the embodiment of Fig. 1, the transmission of correction data A may be accomplished via an L-band transmission link using a communication satellite 33 and an L-band receiver 34. The receiver architecture of the mobile station 30 may then be less complicated as the receiving architecture for L-band signal processing is already present for the reception of GNSS signals.

The present invention embodiments provide a method and system to apply three types of corrections in mobiles. These corrections are properly received and decoded in the mobile station 30.

The present invention embodiments make use of the same functional model in the mobile side, therefore, the measurement model can be written as:

$$\delta \widetilde{p}_{i,r}^{s} = \mu_r^s \Delta x_r + m_r^s T_r + t_r + \gamma_i \widetilde{I}_r^s \qquad (23)$$

$$\delta \widetilde{\phi}_{i,r}^{s} = \mu_r^s \Delta x_r + m_r^s T_r + t_r - \gamma_i \widetilde{I}_r^{s} + \lambda_i a_{i,r}^s \qquad (24)$$

where $\mu_r^s$ is the unit vector of line-of-sight between the mobile receiver $r$ and satellite $s$ ; $\delta \widetilde{p}_{i,r}^{s} = p_{i,r}^s - R_r^s + \widetilde{b}^{\,s}$ , and

$\delta \widetilde{\phi}_{i,r}^{s} = \phi_{i,r}^s - R_r^s + \widetilde{b}^{\,s}$ , here $R_r^s$ is computed using precise orbits and a priori coordinates of receiver $r$, $\widetilde{b}^s$ is the precise satellite clock; $\Delta x_r$ the correction to the a priori position. The remaining parameters are the same as in Eq.(10-11) and Eq. (16-17), except that the receiver index $a$ or $b$ is changed to $r$.

The present invention embodiments select a reference satellite in the mobile to remove/eliminate receiver specific hardware delays. In this case, the functional model of the mobile is written as:

$$
\begin{bmatrix} P_{1,r} \\ P_{2,r} \\ \Phi_{1,r} \\ \Phi_{2,r} \end{bmatrix} =
\begin{bmatrix}
\mu_r & M_r & e_n & & \gamma_1 E_{n\times(n-1)} & & \\
\mu_r & M_r & & e_n & \gamma_2 E_{n\times(n-1)} & & \\
\mu_r & M_r & & & e_n & -\gamma_1 E_{n\times(n-1)} & \lambda_1 E_{n\times(n-1)} \\
\mu_r & M_r & & & e_n & -\gamma_2 E_{n\times(n-1)} & & \lambda_2 E_{n\times(n-1)}
\end{bmatrix}
\begin{bmatrix}
\Delta x_r \\ T_r \\ t_{p_1,r} \\ t_{p_2,r} \\ t_{\phi_1,r} \\ t_{\phi_2,r} \\ I_{r,sd} \\ A_{1,r,sd} \\ A_{2,r,sd}
\end{bmatrix}
$$

$$(25)$$

where

$$
\begin{aligned}
\mu_r &:= \begin{pmatrix} \mu_r^1 & \mu_r^2 & \cdots & \mu_r^n \end{pmatrix}^T \\
t_{p_1,r} &:= t_r + \gamma_1 \widetilde{I}_r^{n} \\
t_{p_2,r} &:= t_r + \gamma_2 \widetilde{I}_r^{n} \\
t_{\phi_1,r} &:= t_r - \gamma_1 \widetilde{I}_r^{n} + a_{1,r}^n \\
t_{\phi_2,r} &:= t_r - \gamma_2 \widetilde{I}_r^{n} + a_{2,r}^n \\
I_{r,sd} &:= \begin{pmatrix} \widetilde{I}_r^{1,n} & \widetilde{I}_r^{2,n} & \cdots & \widetilde{I}_r^{n-1,n} \end{pmatrix}^T \\
A_{i,r,sd} &:= \begin{pmatrix} a_{i,r}^{1,n} & a_{i,r}^{2,n} & \cdots & a_{i,r}^{n-1,n} \end{pmatrix}^T \\
E_{n\times(n-1)} &:= \begin{pmatrix} I_{n-1} \\ 0_{n-1}^T \end{pmatrix} = \begin{pmatrix} 1 & & \\ & \ddots & \\ & & 1 \\ 0 & \cdots & 0 \end{pmatrix}
\end{aligned}
$$

$$(26)$$

where

$$\widetilde{I}_r^{s,n} := \widetilde{I}_r^{s} - \widetilde{I}_r^{n} = I_r^{s} - I_r^{n} + \frac{\gamma_1}{\gamma_1 - \gamma_2}\left(-d_{p_1}^s + d_{p_1}^n + d_{p_2}^s - d_{p_2}^n\right) \qquad (27)$$

and

$$a_{1,r}^{s,n} := a_{1,r}^{s} - a_{1,r}^{n} = N_{1,r}^{s,n} - \frac{1}{\lambda_1}\left( d_{\phi_1}^{s,n} + \frac{\gamma_1 + \gamma_2}{\gamma_1 - \gamma_2} d_{p_1}^{s,n} - \frac{2\gamma_1}{\gamma_1 - \gamma_2} d_{p_2}^{s,n} \right) \qquad (28)$$

$$a_{2,r}^{s,n} := a_{2,r}^{s} - a_{2,r}^{n} = N_{2,r}^{s,n} - \frac{1}{\lambda_2}\left( d_{\phi_2}^{s,n} + \frac{2\gamma_2}{\gamma_1 - \gamma_2} d_{p_1}^{s,n} - \frac{\gamma_1 + \gamma_2}{\gamma_1 - \gamma_2} d_{p_2}^{s,n} \right) \qquad (29)$$

The functional model can be written in a simplified way. Assuming

$$y := \begin{bmatrix} P_{1,r} \\ P_{2,r} \\ \Phi_{1,r} \\ \Phi_{2,r} \end{bmatrix}, \quad x := \begin{bmatrix} \Delta x_r \\ T_r \\ t_{p_1,r} \\ t_{p_2,r} \\ t_{\phi_1,r} \\ t_{\phi_2,r} \\ I_{r,sd} \\ A_{1,r,sd} \\ A_{2,r,sd} \end{bmatrix}$$

The present invention embodiments provide a method to apply the corrections B to the phase observations,

$$y := \begin{bmatrix} P_{1,r} \\ P_{2,r} \\ \Phi_{1,r} - \lambda_1 E_{n \times (n-1)} d_{1,a,sd} \\ \Phi_{2,r} - \lambda_2 E_{n \times (n-1)} d_{2,a,sd} \end{bmatrix} \qquad (30)$$

The parameter vector is then changed to

$$x := \begin{bmatrix} \Delta x_r \\ T_r \\ t_{p_1,r} \\ t_{p_2,r} \\ t_{\phi_1,r} \\ t_{\phi_2,r} \\ I_{r,sd} \\ N_{1,a,r} \\ N_{2,a,r} \end{bmatrix} \qquad (31)$$

where $N_{i,a,r} = A_{i,r,sd} - d_{i,a,sd} = \left( N_{i,a,r}^{1,n} \quad N_{i,a,r}^{2,n} \quad \cdots \quad N_{i,a,r}^{n-1,n} \right)^{T}$, in which, the hardware delays are removed, and ambiguities are the double-differenced ones between receiver *r* and master reference station *a*. The ambiguity term in the mobile has therefore an integer nature without containing hardware delay anymore, which meets the requirement to trigger an integer ambiguity estimation scheme, e.g. the LAMBDA method described in prior art.

The present invention embodiments provide a method to apply the corrections I to the carrier phase and pseudo range observations

$$
y := \begin{bmatrix}
P_{1,r} - \gamma_1 E_{n \times (n-1)} I_{sd} \\
P_{2,r} - \gamma_2 E_{n \times (n-1)} I_{sd} \\
\Phi_{1,r} - \lambda_1 E_{n \times (n-1)} d_{1,a,sd} + \gamma_1 E_{n \times (n-1)} I_{sd} \\
\Phi_{2,r} - \lambda_2 E_{n \times (n-1)} d_{2,a,sd} + \gamma_2 E_{n \times (n-1)} I_{sd}
\end{bmatrix}
\tag{32}
$$

The parameter vector can be changed as follows:

$$
x := \begin{bmatrix}
\Delta x_r \\
T_r \\
t_{p_1,r} \\
t_{p_2,r} \\
t_{\phi_1,r} \\
t_{\phi_2,r} \\
\delta I_{a,r} \\
N_{1,a,r} \\
N_{2,a,r}
\end{bmatrix}
\tag{33}
$$

where $\delta I_{a,r} = I_{r,sd} - I_{a,sd}$ is a residual ionospheric delay, which can be constrained, particularly in a small region. The residual ionospheric delay can be constrained to 1-2 cm, which will significantly reduce the time for estimating the correct integer values of $N_{i,a,r}$ and improve the accuracy of the estimated $\Delta x_r$.

The present invention embodiments provide a method to apply the corrections T to the carrier phase and pseudo range observations

$$
y := \begin{bmatrix}
P_{1,r} - \gamma_1 E_{n \times (n-1)} I_{sd} - M_r T_a \\
P_{2,r} - \gamma_2 E_{n \times (n-1)} I_{sd} - M_r T_a \\
\Phi_{1,r} - \lambda_1 E_{n \times (n-1)} d_{1,a,sd} + \gamma_1 E_{n \times (n-1)} I_{sd} - M_r T_a \\
\Phi_{2,r} - \lambda_2 E_{n \times (n-1)} d_{2,a,sd} + \gamma_2 E_{n \times (n-1)} I_{sd} - M_r T_a
\end{bmatrix}
\tag{34}
$$

The parameter vector can be changed as follows:

$$x := \begin{bmatrix} \Delta x_r \\ \delta T_r \\ t_{p_1,r} \\ t_{p_2,r} \\ t_{\phi_1,r} \\ t_{\phi_2,r} \\ \delta I_{a,r} \\ N_{1,a,r} \\ N_{2,a,r} \end{bmatrix} \qquad (35)$$

where $\delta T_{a,r} = T_r - T_a$ is a residual tropospheric zenith delay, which can be constrained, particularly in a small region. The residual tropospheric zenith delay can e.g. be constrained to 1-2 cm, which will help to further reduce the time for estimating the correct integer values of $N_{i,a,r}$, and improve the accuracy of the estimated $\Delta x_r$.

The present invention embodiments make use of a mobile position $x_r$ ($\Delta x_r$ plus the a priori position) and the estimated coordinates of reference stations $x_a$ and $x_b$ to calculate the baselines:

$$\Delta x_{a,r} = x_r - x_a$$

$$\Delta x_{b,r} = x_r - x_b$$

As mentioned above, the position of the reference station 4a, 4b is calculated simultaneously with an accuracy of 10 cm. However, the precision of baselines can be a couple of millimetres as the double-difference ambiguities are fixed to their integer values, and the ionospheric/tropospheric effects are constrained at the mobiles. This is particularly suitable for applications as e.g. determination of a gunfloat position (a platform towed by a seismic vessel) with respect to the vessel. The distance between the gunfloat and the seismic vessel is about several hundreds of meters at most.

For such an application the secondary update frequency $1/T_1$, $1/T_2$ of the tropospheric and ionospheric corrections (T and I) may be made dependent on the distance between the one or more reference stations 4a, 4b and the mobile station 30. This allows a proper trade off of performance, bandwidth use, etc.

Even if a precise reference position is not available (but approximate coordinates with an accuracy of 1-2 meters instead, for example), e.g., due to a reset in the PPP process in the GNS signal correction system 2, the sum of all three types of corrections is still good enough to determine a precise relative position at the mobile station 30. However, in this case each individual bias B, I, T changes so quickly, that the biases B, I, T have to be transmitted together, i.e., at the same time and at the same interval. To that effect, and upon detection of an impossibility to reliably calculate the correction data B, I, T (at the reference station 4a, 4b for an epoch of received GNSS signals), the update intervals $t_1$, $t_2$, $t_3$ and secondary update frequency $f_1$, $f_2$, $f_3$ of the one or more subgroups B, I, T are synchronized (and possibly also intensified). A mechanism is then provided to detect such poor reference positions, e.g. variance-covariance of positions.

In an even further aspect, the present invention also relates to a mobile station for use with a GNS signal correction system, the mobile station 30 comprising:

- a mobile GNSS receiver 32 for acquiring GNSS data comprising pseudo range mobile observations $P_r$ and carrier phase mobile observations $\Phi_r$ from the plurality of GNSS satellites 26a-c transmitted over multiple epochs,
- a mobile signal receiver 34 for receiving GNSS corrections,

wherein the mobile station 30 further comprises a mobile processing unit 38 connected to the mobile GNSS receiver 32 and the mobile signal receiver 34, the mobile processing unit 38 being arranged to use the correction data being transmitted according to any one of the embodiments described above. I.e. the mobile processing unit 38 is arranged to use the subgroups of correction data B, I, T, or if indication is received from the GNSS signal correction system 2 that a precise position is not available for an epoch, to use the sum of correction data.

The present invention embodiments have been described above with reference to a number of exemplary embodiments as shown in the drawings. Modifications and alternative implementations of some parts or elements are possible, and are included in the scope of protection as defined in the appended claims.

LIST OF REFERENCE SYMBOLS

| | |
|---|---|
| 2 | GNS signal correction system |
| 4 | reference receiver |
| 10 | system GNSS antenna |
| 12 | system control facility |
| 14 | system computation facility (e.g. with processor unit) |
| 16 | system signal transmitter |
| 18 | data link |
| 26 | GNSS satellite |
| 30 | mobile station (e.g. rover) |
| 32 | mobile GNSS receiver |
| 33 | communication satellite |
| 34 | mobile signal antenna (e.g. L-band receiver) |
| 38 | mobile processor unit |
| 40 | user interface |
| A | GNSS correction data |
| T | first subgroup of correction data (e.g. tropospheric corrections) |
| I | second subgroup of correction data (e.g. ionospheric corrections) |
| B | third subgroup of correction data (e.g. hardware delay bias) |
| $P_a$ | pseudo range system observation |
| $\Phi_a$ | carrier phase system observation |
| $P_r$ | pseudo range mobile observation |
| $\Phi_r$ | carrier phase mobile observation |
| $R_a$ | reference station position |
| $R_r$ | mobile station position |
| $Z_r$ | mobile vertical position component |

**Claims**

1. A method for providing correction data ($A$) in a Global Navigation Satellite System (GNSS) based Precise Relative Positioning (PRP) system, the method comprising:

    - determining the correction data using GNSS data that comprises pseudo range system observations ($P_a$) and carrier phase system observations ($\Phi_a$) received by one or more reference stations (4a, 4b) from a plurality of GNSS satellites (26a-c) transmitted over multiple epochs, and
    - transmitting the correction data to a mobile station (30);

    **characterized in that** determining the correction data comprises calculating at least two subgroups of correction terms (B, I, T) being terms of a state vector of a functional model having observation equations for each reference station, **and in that** transmitting the correction data comprises transmitting the at least two subgroups of correction terms (B, I, T) with mutually different update frequencies ($f_1$, $f_2$, $f_3$).

2. The method according to claim 1, wherein the at least two subgroups of correction terms (B, I, T) comprise a first subgroup including tropospheric corrections (T) transmitted with a first update frequency ($f_1$), a second subgroup including ionospheric corrections (I) transmitted with a second update frequency ($f_2$), and a third subgroup including hardware delay bias (B) transmitted with a third update frequency ($f_3$).

3. The method according to claim 2, wherein at least one of the first update frequency ($f_1$) and the second update frequency ($f_2$) is dependent on a distance between the one or more reference stations (4a, 4b) and the mobile station (30).

4. The method according to any one of claims 2-3, wherein initial packets for the at least two subgroups of correction terms (B, I, T) are transmitted at mutually different initial update times ($t_1$, $t_2$, $t_3$).

5. The method according to claim 4, comprising:

   - synchronizing the initial update times ($t_1$, $t_2$, $t_3$) and the update frequencies ($f_1$, $f_2$, $f_3$) of the at least two subgroups of correction terms (B, I, T), upon detection of an impossibility to reliably calculate the correction data.

6. The method according to any one of claims 2-5, wherein the third update frequency ($f_3$) is lower than the first update frequency ($f_1$) and/or the second update frequency ($f_2$), e.g. at least three times lower.

7. The method according to claim 6, wherein the third update frequency ($f_3$) is less than once per twenty seconds, e.g. once per sixty seconds.

8. The method according to any one of claims 2-7, wherein the first update frequency ($f_1$) is at least once per thirty seconds.

9. The method according to any one of claims 2-8, wherein the second update frequency ($f_2$) is at least once per twenty seconds, e.g. once per five seconds.

10. The method according to any one of claims 2-9, wherein the second update frequency ($f_2$) and the first update frequency ($f_1$) are different.

11. The method according to any one claims 1-10, wherein the one or more reference stations (4a, 4b) are dynamic reference stations.

12. The method according to any one of claims 1-1 l, wherein the correction data (*A*) are provided using a GNSS reference station (4a, 4b), for which the position and other parameters are estimated using a Precise Point Positioning (PPP) technique.

13. The method according to any one of claims 1-12, wherein the functional model having observation equations for each reference station (4a, 4b) utilizes the pseudo range system observations ($P_a$) and the carrier phase system observations ($\Phi_a$) as measurements.

14. A global Navigation Satellite (GNS) signal correction system (2) for estimating and transmitting GNSS correction data (*A*) to a mobile station (30), the GNS signal correction system (2) comprising:

   - one or more reference stations (4a, 4b) comprising a system GNSS receiver (10) for acquiring GNSS data comprising pseudo range system observations ($P_a$) and carrier phase system observations ($\Phi_a$) from a plurality of GNSS satellites (26a-c) transmitted over multiple epochs;
   - a system processor unit (14) configured for receiving the GNSS data from the one or more reference stations (4a, 4b) in real time, and calculating the correction data (*A*),
   - a system signal transmitter (16) connected to the system processor unit (14) for transmitting the correction data (*A*) to the mobile station (30);

   wherein the system processor unit (14) and the system signal transmitter (16) are configured to execute the method according to any one of claims 1-13.

15. A mobile station for use with Global Navigation Satellite (GNS) signal correction system, the mobile station (30) comprising:

   - a mobile GNSS receiver (32) for acquiring GNSS data comprising pseudo range mobile observations ($P_r$) and carrier phase mobile observations ($\Phi_r$) from the plurality of GNSS satellites (26a-c) transmitted over multiple epochs,
   - a mobile signal receiver (34) adapted to receive GNSS correction data (*A*) from a GNS signal correction system (2) according to claim 14 and transmitted according to the method of any one of claims 1-13,

   wherein the mobile station (30) further comprises a mobile processing unit (38) connected to the mobile GNSS receiver (32) and the mobile signal receiver (34),

the mobile processing unit (38) being arranged to use the correction data.

**Patentansprüche**

1.  Verfahren zur Bereitstellung von Korrekturdaten (A) in einem präzisen relativen Positionierungs-(PRP)-System auf der Grundlage eines globalen Navigations-Satellitensystems (GNSS), wobei das Verfahren umfasst:

    - Bestimmen der Korrekturdaten unter Heranziehung der GNSS-Daten, die Pseudobereichssystem-Überwachungen ($P_a$) und Trägerphasensystem-Überwachungen ($\Phi_a$) umfassen, welche mittels einer oder mehrerer Referenzstationen (4a, 4b) von einer Vielzahl von GNSS-Satelliten (26a-c) empfangen und über mehrere Zeiträume übertragen sind,
    - und Übertragen der Korrekturdaten zu einer mobilen Station (30),

    **dadurch gekennzeichnet, dass** das Bestimmen der Korrekturdaten ein Berechnen von zumindest zwei Subgruppen von Korrekturtermen (B, I, T) umfasst, die Terme eines Zustandsvektors eines Funktionsmodells sind, welches Überwachungs-Gleichungen für jede Referenzstation aufweist, und dass das Übertragen der Korrekturdaten ein Übertragen der zumindest zwei Subgruppen von Korrekturtermen (B, I, T) mit voneinander verschiedenen Aktualisierungsfrequenzen ($f_1$, $f_2$, $f_3$) umfasst.

2.  Verfahren nach Anspruch 1, wobei die zumindest zwei Subgruppen von Korrekturtermen (B, I, T) eine erste Subgruppe umfasst, welche mit einer ersten Aktualisierungsfrequenz ($f_1$) übertragene troposphärische Korrekturen (T) enthält, eine zweite Subgruppe umfasst, die mit einer zweiten Aktualisierungsfrequenz ($f_2$) übertragene ionosphärische Korrekturen (I) enthält, und eine dritte Subgruppe umfasst, die eine mit einer dritten Aktualisierungsfrequenz ($f_3$) übertragene Hardware-Verzögerungsneigung (B) enthält.

3.  Verfahren nach Anspruch 2, wobei die zumindest eine der ersten Aktualisierungsfrequenz ($f_1$) und der zweiten Aktualisierungsfrequenz ($f_2$) von einem Abstand zwischen der einen oder den mehreren Referenzstationen (4a, 4b) und der mobilen Station (30) abhängt.

4.  Verfahren nach einem der Ansprüche 2 bis 3, wobei Anfangspakete für die zumindest zwei Subgruppen von Korrekturtermen (B, I, T) zu voneinander verschiedenen Anfangs-Aktualisierungszeiten ($t_1$, $t_2$, $t_3$) übertragen werden.

5.  Verfahren nach Anspruch 4, umfassend

    - ein Synchronisieren der Anfangs-Aktualisierungszeiten ($t_1$, $t_2$, $t_3$) und der Aktualisierungsfrequenzen ($f_1$, $f_2$, $f_3$) der zumindest zwei Subgruppen von Korrekturtermen (B, I, T) auf ein Detektieren einer Unmöglichkeit hin, die Korrekturdaten zuverlässig zu berechnen.

6.  Verfahren nach einem der Ansprüche 2 bis 5, wobei die dritte Aktualisierungsfrequenz ($f_3$) niedriger, beispielsweise zumindest dreimal niedriger, ist als die erste Aktualisierungsfrequenz ($f_1$) und/oder die zweite Aktualisierungsfrequenz ($f_2$).

7.  Verfahren nach Anspruch 6, wobei die dritte Aktualisierungsfrequenz ($f_3$) niedriger ist als einmal in 20 Sekunden, beispielsweise einmal in 60 Sekunden.

8.  Verfahren nach einem der Ansprüche 2 bis 7, wobei die erste Aktualisierungsfrequenz ($f_1$) zumindest einmal in 30 Sekunden ist.

9.  Verfahren nach einem der Ansprüche 2 bis 8, wobei die zweite Aktualisierungsfrequenz ($f_2$) zumindest einmal in 20 Sekunden, beispielsweise einmal in fünf Sekunden ist.

10. Verfahren nach einem der Ansprüche 2 bis 9, wobei die zweite Aktualisierungsfrequenz ($f_2$) und die erste Aktualisierungsfrequenz ($f_1$) verschieden sind.

11. Verfahren nach einem der Ansprüche 1 bis 10, wobei die eine oder mehreren Referenzstationen (4a, 4b) dynamische Referenzstationen sind.

**12.** Verfahren nach einem der Ansprüche 1 bis 11, wobei die Korrekturdaten (A) unter Heranziehung einer GNSS-Referenzstation (4a, 4b) bereitgestellt werden, für die die Position und andere Parameter unter Heranziehung einer präzisen Punkt-Positionsbestimmungs-PPP-Technik geschätzt werden.

**13.** Verfahren nach einem der Ansprüche 1 bis 12, wobei das Funktionsmodell, welches Überwachungs-Gleichungen für jede Referenzstation (4a, 4b) aufweist, die Pseudobereichssystem-Überwachungen ($P_a$) und die Trägerphasen-system-Überwachungen ($\Phi_a$) als Messergebnisse heranzieht.

**14.** Globales Navigations-Satelliten-(GNS)-Signalkorrektur-system (2) zum Schätzen und Übertragen von GNSS-Korrekturdaten (A) zu einer mobilen Station (30), wobei das GNS-Signalkorrektursystem (2) umfasst:

- ein oder mehrere Referenzstationen (4a, 4b), umfassend einen System-GNSS-Empfänger (10) zum Gewinnen von GNSS-Daten, die Pseudobereichssystem-Überwachungen ($P_a$) und Trägerphasensystem-Überwachungen ($\Phi_a$) von einer Vielzahl von GNSS-Satelliten (26a-c) umfassen die über mehrere Zeiträume übertragen sind,
- eine System-Prozessoreinheit (14), die konfiguriert ist, um die GNSS-Daten von der einen oder den mehreren Referenzstationen (4a, 4b) in Echtzeit zu empfangen und um die Korrekturdaten (A) zu berechnen,
- einen System-Signalsender (16), der mit der System-Prozessoreinheit (14) zur Übertragung der Korrekturdaten (A) zu der mobilen Station (30) verbunden ist,
- wobei die System-Prozessoreinheit (14) und der System-Signalsender (16) konfiguriert sind, um das Verfahren nach einem der Ansprüche 1 bis 13 auszuführen.

**15.** Mobile Station für die Verwendung mit einem globalen Navigations-Satelliten-(GNS)-Signalkorrektursystem, wobei die mobile Station (30) umfasst:

- einen mobilen GNSS-Empfänger (32) zur Gewinnung von GNSS-Daten, die mobile Pseudobereichs-Überwachungen ($P_r$) und mobile Trägerphasen-Überwachungen ($\Phi_r$) von der Vielzahl der GNSS-Satelliten (26a-c) umfassen die über mehrere Zeiträume übertragen sind,
- einen mobilen Signalempfänger (34), der geeignet ist, die gemäß dem Verfahren nach einem der Ansprüche 1 bis 13 übertragenen GNSS-Korrekturdaten (A) von einem GNS-Signalkorrektursystem (2) nach Anspruch 14 zu empfangen,
- wobei die mobile Station (30) ferner eine mit dem mobilen GNSS-Empfänger (32) und dem mobilen Signalempfänger (34) verbundene mobile Verarbeitungseinheit (38) umfasst, wobei die mobile Verarbeitungseinheit (38) ausgelegt ist, um die Korrekturdaten zu verwenden.

**Revendications**

**1.** Méthode pour fournir des données de correction (*A*) dans un système de positionnement relatif précis (PRP) basé sur un système de navigation par satellites globale (GNSS), la méthode comprenant les étapes consistant à :

- déterminer les données de correction en utilisant des données GNSS comprenant des observations de système de pseudo-plage ($P_a$) et des observations de système de phase porteuse ($\Phi_a$) reçues par une ou plusieurs stations de référence (4a, 4b) à partir d'une pluralité de satellites GNSS (26a-c) transmises sur de multiples époques, et
- transmettre les données de correction à une station mobile (30) ;

**caractérisée en ce que** déterminer des données de correction comprend le calcul d'au moins deux sous-groupes de termes de correction (B, I, T) étant des termes d'un vecteur d'état d'un modèle fonctionnel comportant des équations d'observation pour chaque station de référence, **et en ce que** la transmission des données de correction comprend la transmission des au moins deux sous-groupes de termes de correction (B, I, T) ayant des fréquences de mise à jour mutuellement différents ($f_1$, $f_2$, $f_3$).

**2.** Méthode selon la revendication 1, dans laquelle les au moins deux sous-groupes de termes de correction (B, I, T) comprennent un premier sous-groupe comprenant des corrections troposphériques (T) transmises avec une première fréquence de mise à jour ($f_1$), un deuxième sous-groupe comprenant des corrections ionosphèriques (1) transmises avec une deuxième fréquence de mise à jour ($f_2$), et un troisième sous-groupe comprenant une polarisation de retard matériel (B) transmise avec une troisième fréquence de mise à jour ($f_3$).

**3.** Méthode selon la revendication 2, dans laquelle au moins l'une de la première fréquence de mise à jour ($f_1$) et de la deuxième fréquence de mise à jour ($f_2$) dépend d'une distance entre la ou les plusieurs stations de référence (4a, 4b) et la station mobile (30).

**4.** Méthode selon l'une quelconque des revendications 2 à 3, dans laquelle des paquets initiaux pour les au moins deux sous-groupes de termes de correction (B, I, T) sont transmis à des instants de mise à jour initiaux mutuellement différents ($t_1$, $t_2$, $t_3$).

**5.** Méthode selon la revendication 4, consistant à :

- synchroniser les temps de mise à jour initiaux ($t_1$, $t_2$, $t_3$) et les fréquences de mise à jour ($f_1$, $f_2$, $f_3$) des au moins deux sous-groupes de termes de correction (B, I, T), lors de la détection d'une impossibilité de calculer de façon fiable les données de correction.

**6.** Méthode selon l'une quelconque des revendications 2 à 5, dans laquelle la troisième fréquence de mise à jour ($f_3$) est inférieure à la première fréquence de mise à jour ($f_1$) et/ou à la deuxième fréquence de mise à jour ($f_2$), par exemple au moins trois fois inférieure.

**7.** Méthode selon la revendication 6, dans laquelle la troisième fréquence de mise à jour ($f_3$) est inférieure à une fois par vingt secondes, par exemple une fois par soixante secondes.

**8.** Méthode selon l'une quelconque des revendications 2 à 7, dans laquelle la première fréquence de mise à jour ($f_1$) est d'au moins une fois par trente secondes.

**9.** Méthode selon l'une quelconque des revendications 2 à 8, dans laquelle la deuxième fréquence de mise à jour ($f_2$) est d'au moins une fois par vingt secondes, par exemple une fois par cinq secondes.

**10.** Méthode selon l'une quelconque des revendications 2 à 9, dans laquelle la deuxième fréquence de mise à jour ($f_2$) et la première fréquence de mise à jour ($f_1$) sont différentes.

**11.** Méthode selon l'une quelconque des revendications 1 à 10, dans laquelle la ou les stations de référence (4a, 4b) sont des stations de référence dynamiques.

**12.** Méthode selon l'une quelconque des revendications 1 à 11, dans laquelle les données de correction (*A*) sont fournies en utilisant une station de référence GNSS (4a, 4b), pour laquelle la position et autres paramètres sont estimés en utilisant une technique de Positionnement Ponctuel Précis (PPP).

**13.** Méthode selon l'une quelconque des revendications 1 à 12, dans laquelle le modèle fonctionnel comportant des équations d'observation pour chaque station de référence (4a, 4b) utilise les observations de système de pseudo-plage ($P_a$) et les observations de système de phase porteuse ($\Phi_a$) comme mesures.

**14.** Système de correction de signal (2) d'un satellite de navigation globale (GNS) pour estimer et transmettre des données de correction GNSS (*A*) à une station mobile (30), le système de correction de signal GNS (2) comprenant :

- une ou plusieurs stations de référence (4a, 4b) comprenant un récepteur GNSS de système (10) pour acquérir des données GNSS comprenant des observations de système de pseudo-plage ($P_a$) et des observations de système de phase porteuse ($\Phi_a$) d'une pluralité de satellites GNSS (26a-c) transmises sur plusieurs époques ;
- une unité de processeur de système (14) configurée pour recevoir les données GNSS provenant des une ou plusieurs stations de référence (4a, 4b) en temps réel, et calculer les données de correction (*A*),
- un émetteur de signal de système (16) connecté à l'unité de processeur de système (14) pour transmettre les données de correction (*A*) à la station mobile (30) ;

dans lequel l'unité de processeur de système (14) et l'émetteur de signal de système (16) sont configurés pour exécuter la méthode selon l'une quelconque des revendications 1 à 13.

**15.** Station mobile pour utilisation avec le système de correction de signal de satellite de navigation globale (GNS), la station mobile (30) comprenant :

- un récepteur GNSS mobile (32) pour acquérir des données GNSS comprenant des observations mobiles de pseudo-plage ($P_r$) et des observations mobiles de phase porteuse ($\Phi_r$) provenant de la pluralité de satellites GNSS (26a-c) transmises sur plusieurs époques,
- un récepteur de signal mobile (34) adapté pour recevoir des données de correction GNSS (*A*) provenant d'un système de correction de signal GNS (2) selon la revendication 14 et transmises conformément à la méthode selon l'une quelconque des revendications 1 à 13,

dans laquelle la station mobile (30) comprend en outre une unité de traitement mobile (38) connectée au récepteur GNSS mobile (32) et au récepteur de signal mobile (34), l'unité de traitement mobile (38) étant conçue pour utiliser les données de correction.

# Fig. 1

# Fig. 2a

# Fig. 2b

**EP 2 995 973 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006048448 A1

### Non-patent literature cited in the description

- GPS for Geodesy. Springer, 1998